# FASCICULE DE BREVET EUROPEEN

(11) **EP 0 449 677 B1**
(45) Date de publication et mention de la délivrance du brevet: **26.05.1993**
(21) Numéro de dépôt: 91400510.3
(22) Date de dépôt: 26.02.1991
(51) Int. Cl.: F16D 65/16, F16D 65/84

(54) **Frein à disque à chambre de travail thermiquement isolée**
Scheibenbremse mit thermisch isolierter Arbeitskammer
Disc brake with thermally insulated working chamber

(30) Priorité: 29.03.1990 FR 9004002
(43) Date de publication de la demande: 02.10.1991
(73) Titulaire: ALLIEDSIGNAL EUROPE SERVICES TECHNIQUES, 93700 Drancy (FR)
(72) Inventeur: Mery, Jean-Claude, Bendix Europe, F-93700 Drancy (FR)

(56) Documents cités:
- WO-A-89/11052
- FR-A- 2 548 321
- US-A- 3 476 221
- PATENT ABSTRACTS OF JAPAN, vol. 8, no. 189 (M-321)[1626], 30 août 1984;& JP-A-59 80 536 (AKEBONO BRAKE KOGYO K.K.) 10-05-1984
- PATENT ABSTRACTS OF JAPAN, vol. 10, no. 204 (M-499)[2260], 17 juillet 1986;& JP-A-61 45 120 (NISSIN KOGYO K.K.) 05-03-1986

## Description

La présente invention concerne les freins à disque à étrier comportant au moins une chambre de travail hydraulique déterminée par un étrier et un piston dont le fond constitue une paroi interne thermiquement isolant, ladite chambre de travail étant destinée à écarter l'un de l'autre le piston en appui sur un patin de frein et l'étrier en appui sur l'autre patin de frein.

On sait que la chaleur générée par la friction des patins de frein sur le disque freiné se répartit rapidement dans l'ensemble du frein du fait du matériau utilisé pour réaliser le frein. En effet, ce matériau est généralement un métal, tel la fonte, devant résister à de très fortes contraintes mécaniques.

Cette chaleur est ainsi transmise au liquide de frein qui se trouve dans la chambre de travail et qui peut atteindre ainsi sa température de vaporisation. Si un liquide n'est pas compressible, la vapeur par contre l'est. Il peut alors en résulter de graves perturbations dans le fonctionnement du frein.

Pour obvier à ce problème, le document W0-A-89/11052 propose d'utiliser un piston en céramique à faible conductivité thermique. Toutefois un tel piston est très coûteux et ne protège pas le liquide de frein de la chaleur transmise par l'étrier.

Dans le même but, le document JP-A-61-45120 propose de recouvrir toutes les parties du frein en regard du disque au moyen d'un matériau céramique. Cependant, une telle solution ne permet pas à la chaleur engendrée sur le disque de se dissiper par l'intermédiaire du frein lui-même. Il en résulte souvent une dilatation thermique et une brûlure des garnitures.

La présente invention a pour but d'obvier à ces inconvénients au moyen d'une solution simple et peu coûteuse à mettre en oeuvre.

Selon l'invention, toutes les parois internes de la chambre de travail sont recouvertes d'une couche d'un matériau thermiquement isolant.

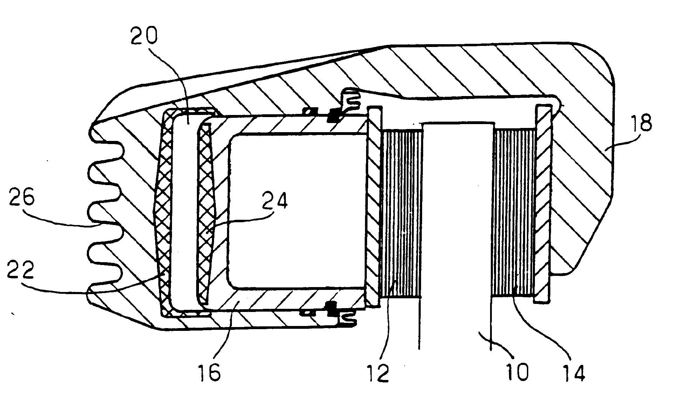

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence à la planche unique sur laquelle :
- la Figure unique représente schématiquement en coupe un frein à disque conforme à la présente invention.

En référence maintenant à cette Figure unique, l'homme du métier reconnaitra un disque 10 sur les faces opposées duquel deux patins de frein 12,14 s'appuient, l'un 12 par l'intermédiaire d'un piston 16, l'autre 14 par l'intermédiaire de l'étrier 18. Le piston 16 et l'étrier 18 déterminent entre eux une chambre de travail hydraulique 20 connectée à une source de fluide sous pression, non représentée, telle un maître-cylindre.

Selon l'invention, cette chambre de travail 20 est thermiquement isolée grâce au fait que ses parois internes sont recouvertes d'une couche 22,24 d'un matériau thermiquement isolant. Une céramique constitue un tel matériau approprié.

Une telle couche d'une épaisseur de quelques microns peut être projetée au moyen d'un chalumeau à plasma. Si l'on désire une couche d'une épaisseur de quelques millimètres, on préfère la mettre en place par collage, par exemple au moyen d'une colle céramique ou phénolique, ou par insert dans la fonderie.

Le liquide de frein évolue alors dans une chambre thermiquement isolée et a, par suite, une plus faible probabilité d'atteindre sa température de vaporisation. Pour améliorer l'ensemble, on pourra prévoir de disposer des ailettes de refroidissement 26 sur la face opposée de la paroi de l'étrier 18 revêtue de la couche isolante 22.

Bien que seul un mode de réalisation de l'invention ait été décrit, il est évident que l'homme du métier pourra y apporter de nombreuses modifications sans sortir du cadre de l'invention telle que défini par les revendications annexées.

## Revendications

1. Frein à disque à étrier comportant au moins une chambre de travail hydraulique (20) déterminée par un étrier (18) et un piston (16) dont le fond constitue une paroi interne thermiquement isolant, ladite chambre de travail (20) étant destinée à écarter l'un de l'autre le piston (16) en appui sur un patin de frein (12) et l'étrier (18) en appui sur l'autre patin de frein (14), caractérisé en ce que toutes les parois internes de ladite chambre de travail (20) sont recouvertes d'une couche (22,24) d'un matériau thermiquement isolant.

2. Frein à disque à étrier selon la revendication 1, caractérisé en ce que ledit matériau thermiquement isolant inclut de la céramique.

3. Frein à disque à étrier selon la revendication 1 ou 2, caractérisé en ce que ladite couche est mise en place par collage.

4. Frein à disque à étrier selon la revendication 1 ou 2, caractérisé en ce que ladite couche est mise en place par insert.

5. Frein à disque à étrier selon la revendication 1 ou 2, caractérisé en ce que ladite couche est projetée par chalumeau à plasma.

6. Frein à disque à étrier selon l'une quelconque des revendications précédentes, caractérisé en ce qu'une face à l'extérieur de l'étrier opposée de la paroi arrière de ladite chambre de travail hydraulique (20) revêtue de ladite couche isolante (22) est pourvue d'ailettes de refroidissement (26).

## Claims

1. Caliper disk brake comprising at least one hydraulic working chamber (20) determined by a caliper (18) and a piston (16) the base of which constitutes a thermally insulating internal wall, the said working chamber (20) being intended for spacing apart from one another the piston (16) bearing on one brake shoe (12) and the caliper (18) bearing on the other brake shoe (14), characterized in that all the inner walls of the said working chamber (20) are covered with a layer (22, 24) of a thermally insulating material.

2. Caliper disk brake according to claim 1, characterized in that the said thermally insulating material includes ceramic.

3. Caliper disk brake according to claim 1 or 2, characterized in that the said layer is applied by adhesive bonding.

4. Caliper disk brake according to claim 1 or 2, characterized in that the said layer is applied by insert.

5. Caliper disk brake according to claim 1 or 2, characterized in that the said layer is sprayed by means of a plasma torch.

6. Caliper disk brake according to any one of the preceding claims, characterized in that a face on the outside of the caliper and opposite the rear wall of the said hydraulic working chamber (20) covered with the said insulating layer (22) is equipped with cooling fins (26).

## Patentansprüche

1. Sattel-Scheibenbremse mit wenigstens einer hydraulischen Arbeitskammer (20), die durch einen Sattel (18) und einen Kolben (16) festgelegt ist, dessen Boden eine thermisch isolierte Innenwand bildet, wobei die Arbeitskammer (20) dazu bestimmt ist, den Kolben (16) und den Sattel (18) voneinander zu entfernen und hierbei den Kolben (16) gegen einen Bremsklotz (12) und den Sattel (18) gegen den anderen Bremsklotz (14) zu halten, **dadurch gekennzeichnet,** daß alle Innenwände der Arbeitskrammer (20) von einer Schicht (22, 24) aus thermisch isolierendem Material bedeckt sind.

2. Sattel-Scheibenbremse nach Anspruch 1, **dadurch gekennzeichnet,** daß das thermisch isolierende Material Keramik enthält.

3. Sattel-Scheibenbremse nach Anspruch 1 oder 2, **dadurch gekennzeichnet,** daß die Schicht durch Klebung aufgebracht ist.

4. Sattel-Scheibenbremse nach Anspruch 1 oder 2, **dadurch gekennzeichnet,** daß die Schicht durch Einsetzen aufgebracht ist.

5. Sattel-Scheibenbremse nach Anspruch 1 oder 2, **dadurch gekennzeichnet,** daß die Schicht durch einen Plasmabrenner aufgespritzt ist.

6. Sattel-Scheibenbremse nach irgendeinem der vorhergehenden Ansprüche, **dadurch gekennzeichnet,** daß eine Fläche außerhalb des Sattels, die zu der hinteren Wand der hydraulischen Arbeitskammer (20) entgegengesetzt ist, die von der Isolierschicht (22) bedeckt ist, mit Kühlrippen (26) versehen ist.
